# EUROPÄISCHE PATENTSCHRIFT

(11) **EP 3 065 609 B1**
(45) Veröffentlichungstag und Bekanntmachung des Hinweises auf die Patenterteilung: **17.10.2018**
(21) Anmeldenummer: 14735856.8
(22) Anmeldetag: 02.07.2014
(51) Int. Cl.: A47J 43/27

(54) **MIXBEHÄLTER**
MIXING CONTAINER
RÉCIPIENT DE MÉLANGE

(30) Priorität: 02.07.2013 DE 102013011000; 26.09.2013 DE 102013015990; 18.10.2013 DE 102013017310
(43) Veröffentlichungstag der Anmeldung: 14.09.2016
(73) Patentinhaber: Enghard, Florian, 60437 Frankfurt am Main (DE)
(72) Erfinder: Enghard, Florian, 60437 Frankfurt am Main (DE)
(74) Vertreter: Völger, Karl Wolfgang
(86) Internationale Anmeldenummer: PCT/EP2014/001808
(87) Internationale Veröffentlichungsnummer: WO 2015/000589

(56) Entgegenhaltungen:
- WO-A2-2012/096990
- DE-A1-102008 055 787
- DE-U1-202013 001 192
- GB-A- 189 410 287
- US-A- 1 060 419
- US-A- 2 776 120
- US-A- 3 136 532
- US-A1- 2008 259 723

## Beschreibung

Die Erfindung betrifft einen Mixbehälter nach dem Oberbegriff des Patentanspruchs 1.

Es sind derzeit zahlreiche Shaker, Mixbecher und Trinkflaschen bekannt, die für das Vermischen von verschiedenen Substanzen vorgesehen sind. Zum Vermischen werden dabei meist Pulver als Nahrungsergänzungsmittel und eine Flüssigkeit verwendet, die oft zur Steigerung der sportlichen Leistungsfähigkeit vorgesehen sind. Diese Shaker, Mixbecher oder Trinkflaschen sollen ein gutes Vermischen der pulverförmigen Nahrungsergänzungsmittel mit der Flüssigkeit ermöglichen oder verbessern. Dazu werden die zu vermischenden Substanzen in einen Mixbehälter eingefüllt und mit einem Deckelelement verschlossen. Durch eine vorzugsweise mit der Hand ausgeführte Mischbewegung werden die Substanzen im Mixbehälter miteinander zu einer dispersiven Flüssigkeit vermischt, die zum sofortigen Trinken geeignet ist. Derartige Mixbehälter können aber auch für andere Mischvorgänge vorgesehen werden.

Eine derartige Mischvorrichtung ist aus der US 2,776,120 A bekannt, die vorzugsweise für das Vermischen von Milchpulver und Wasser vorgesehen ist. Diese Mischvorrichtung enthält einen zylindrischen Behälter, der durch einen flachen Deckel verschließbar ist. An dem Deckel wird eine nach innen ausgerichtete Mischvorrichtung vorzugsweise durch einen Saugnapf am Deckel fixiert. Die Mischvorrichtung besteht aus einer schraubenförmigen Drahtwendel deren Durchmesser ca. 1/2 bis 2/3 des Innendurchmessers des zylindrischen Behälters ausfüllt. Am unteren Ende der schraubenförmigen Drahtwendel ist diese zu einer flachen Schneckenspirale ausgebildet, die im Zentrum in einer kreisförmigen Öffnung endet. Dabei besteht die Drahtwendel aus einem federelastischen Material, das im Ruhezustand unterhalb des Deckels angeordnet ist und vorzugsweise 1/5 der axialen Höhe des zylindrischen Behälters ausfüllt, indem die schraubenförmigen Drahtwendungen dicht aneinander anliegen. Zum Mischen des Milchpulvers mit der Wasserflüssigkeit wird diese zunächst in den zylindrischen Behälter eingefüllt und durch den Deckel mit der Mischvorrichtung verschlossen. Zum Mischen wird der Behälter vorzugsweise von Hand geschüttelt, so dass sich die Spirale durch ihr Eigengewicht und ihre Elastizität in eine axial ausgefahrene Position bis zum Boden des Behälters bewegt und danach wieder zurück schwingt und dadurch das Milchpulver mit dem Wasser vermischt. Obwohl die Spirale die gesamte Länge des Behälters durchfährt, können an den Wänden oder am Boden Pulverklumpen angeklebt sein, die durch die Spirale nicht erreichbar sind und somit nicht vollständig mit dem Wasser vermischt werden.

Aus der US 6,379,032 B1 ist ein Rührwerk bekannt, das ebenfalls zum Vermischen eines Pulvers in einer Flüssigkeit vorgesehen ist. Dabei wird das Rührwerk in einen zylinderförmigen Behälter eingebracht, der durch einen verschraubbaren Deckel verschließbar ist. Das Rührwerk umfasst dabei ein Drahtrahmenelement, das zu einer definierten Form, vorzugsweise als Kugel, ausgebildet ist, die auf der Oberfläche Zwischenräume belässt, durch die die Flüssigkeit mit dem Pulver in den Hohlraum des Drahtrahmenelements ein- und ausfließen kann. Im Hohlraum dieses Drahtrahmenelements ist zusätzlich noch ein kleineres inneres Rührwerk vorgesehen, das sich im Hohlraum des Drahtrahmenelements hin und her bewegen kann und dadurch eine zusätzliche Verwirbelung beim Mischvorgang hervorruft. Dabei ist eine Ausführung einer Mischvorrichtung vorgesehen, bei dem das Drahtrahmenelement mit einem einzigen Draht als spiralförmiges Mischelement zu einem kugelförmigen Gegenstand gewickelt ist. Dazu ist als inneres Rührwerk vorzugsweise ein gleichartig spiralförmig gewickelter kugelförmiger Gegenstand mit kleinerem Durchmesser vorgesehen, der sich im inneren Hohlraum des Drahtrahmenelements befindet. Zum Vermischen der Flüssigkeit mit dem Pulver wird dieses über den geöffneten Deckel in den Innenraum des Mischbehälters eingefüllt, in dem sich mindestens ein Rührwerk mit seinem inneren Rührwerk befindet. Nach dem Verschließen des Deckels wird der Behälter vorzugsweise von Hand geschüttelt, wodurch sich das Rührwerk innerhalb des Behälters durch sein Eigengewicht hin und her bewegt. Dadurch wird die Flüssigkeit mindestens durch die Zwischenräume des Drahtrahmenelements in den Innenraum des Drahtelements ein- und ausströmen und zusätzlich von dem inneren Mischelement verwirbelt. Auch wenn die ballartigen Rührwerke durch den Schüttelvorgang an nahezu alle inneren Mantelteile des Behälters anschlagen können, ist ein verhältnismäßig langer Mischvorgang notwendig, um den gesamten Innenraum des Behälters bis zu dessen Innenwänden zu durchfahren, um eine gleichmäßige Vermischung des Pulvers mit der Flüssigkeit sicher zu bewirken.

Weitere relevante Stand der Technik Dokumente sind: US 2008/259723, US 2 776 120, DE 10 2008 055787, WO 2012/096990, DE 20 2013 001192. Aus der EP 2 341 807 B1 ist ein Trinkbehälter bekannt, in dessen Innenraum an der Behälteröffnung eine Mischvorrichtung angebracht ist. Dabei besteht die Mischvorrichtung aus einem Drahtelement, das als flache elastische Spirale ausgebildet ist und die durch ihr Eigengewicht im Behälterinnenraum in axialer Richtung freischwingend bewegbar ist. Zum Vermischen einer Flüssigkeit mit einem Pulver werden beide in den Innenraum des Trinkbehälters eingefüllt, und dann die Mischvorrichtung am oberen Rand des Trinkbehälters eingeklemmt und die Behälteröffnung durch ein Deckelelement verschlossen. Wird der Trinkbehälter nun von Hand geschüttelt, so taucht die flache elastische Spirale von oben axial in den Behälterinnenraum bis zum Bodenbereich ein und vermischt dadurch das Pulver mit der Flüssigkeit. Dabei kann es insbesondere im oberen Bereich des Trinkbehälters vorkommen, dass an den Innenwänden dort Pulverklumpen anhaften, die von der oben fixierten Spirale nur schwer erreichbar sind und dann einen zeitlich längeren Mischvorgang erfordern.

Der Erfindung liegt deshalb die Aufgabe zugrunde, die Mixbehälter der eingangs genannten Art so zu verbessern, dass die zu vermischenden Substanzen gleichmäßig und schnell mit der Flüssigkeit vermischt werden können, und dass an den Behälterinnenwänden möglichst keine pulverförmigen Substanzen über einen längeren Mischzeitraum anhaften können.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch die mindestens zwei schneckenförmigen Spiralteile nahezu der gesamte Innendurchmesser des Zylinderinnenraumes ausgefüllt wird und deshalb diese beiden schenckenförmigen Spiralteile wie ein Sieb wirken und sich eventuelle Verklumpungen in der Flüssigkeit bereits nach einer Auf- und Ab-Bewegung aufgelöst werden. Dabei werden gleichzeitig durch den an den Innendurchmesser des Zylinderinnenraums angepassten Außendurchmesser der beiden schneckenförmigen und/oder schraubenförmigen Spiralteile etwaige Anhaftungen an den inneren Seitenwänden abgetragen und mit der Flüssigkeit vorteilhafterweise vermischt.

Die Erfindung hat weiterhin den Vorteil, dass durch die mindestens zwei schneckenförmigen Spiralteile und das dazwischen angeordnete schraubenförmige Spiralteil mindestens die beiden an den Behälterinnendurchmesser angepassten Spiralteile beabstandet angeordnet sind und somit eine Führung innerhalb des Behälters bewirken. Dadurch durchfährt das Mischelement durch sein Eigengewicht und einen äußeren Schüttelvorgang gleitend die gesamte axiale Behälterlänge und durchsiebt damit den gesamten Behälterinnenraum und verteilt dadurch die zu vermischenden Substanzen in der Flüssigkeit sehr gleichmäßig. Damit können durch ein kurzzeitiges Schütteln des Mixbehälters beispielsweise pulverförmige Nahrungsergänzungsmittel so in einer Flüssigkeit gelöst oder vermischt werden, dass damit schnell eine dispersive Trinkflüssigkeit herstellbar ist.

Die Erfindung hat gleichzeitig den Vorteil, dass durch die beiden schneckenförmigen und schraubenförmigen Spiralteile auf einfache Weise ein einteiliges Mischelement herstellbar ist, das durch einen einmaligen Wickelvorgang mittels eines Metalldrahtes ausführbar ist. Derartige Mischelemente aus einem gewickelten Draht sind vorteilhafterweise auch nach dem Einfüllvorgang leicht in den Mixbehälter einzuführen oder nach dem Entleeren zu entnehmen und damit auf einfache Weise einer automatischen Reinigung zuzuführen. Derartige Mischelemente aus einem Metalldraht haben gleichzeitig den Vorteil, dass diese sowohl starr als auch federelastisch herstellbar sind. Dabei haben insbesondere federelastische Mischelemente den Vorteil, dass daran anhaftende Pulverklumpen oder Anbackungen sich leicht durch eine federelastische Formveränderung während des Schüttelvorgangs von Draht lösen.

Die Erfindung des Mixbehälters mit dem an den Durchmesser des Innenraums angepassten Mischelements hat gleichzeitig den Vorteil, dass der zylindrische Behälter auch als Trinkflasche ausgebildet werden kann, deren Deckel gleichzeitig ein verschließbaren Trinkstutzen aufweist, so dass die mit einem Nahrungsergänzungsmittel kurzzeitig vermischte Flüssigkeit sogleich trinkbar ist, ohne dass ein Umfüllvorgang der vermischten Trinkflüssigkeit erforderlich wäre.

Die Erfindung des Mixbehälters nach Patentanspruch 6 mit dem Mischelement ohne die schraubenförmigen Spiralteile hat den Vorteil, dass dies einfach herstellbar ist und das dadurch auf einfache Weise der zentrale Durchlass in den schneckenförmigen Spiralteilen verschließbar ist, so dass dadurch die Siebfunktion verbessert wird. Dabei können an einem derartigen Hohlkörper auf einfach Weise auch drei oder mehr schneckenförmige Spiralteile fixiert werden, so dass damit gleichzeitig die Führung im zylindrischen Behälter verbessert wird und sich die Siebfunktion vervielfacht, wobei durch wenige Schüttelvorgänge eine hohe Mischwirkung erzielbar ist.

Bei einer besonderen Ausführung der Erfindung ist zusätzlich vorgesehen, dass innerhalb des schraubenförmigen Spiralteils ein Hohlkörper fixiert wird. Dies hat zusätzlich den Vorteil, dass damit die zentrale Öffnung in dem Mischelement verschließbar ist, durch das die Siebfunktion des Mischelements verbessert wird. Gleichzeitig können in diesen Hohlkörper Kühlmittel eingebracht werden, durch die eine Trinkflüssigkeit während des Mischvorgangs abkühlbar ist. Desweiteren können in diesen Hohlkörper portable pH-Sticks angeordnet werden, durch die die Flüssigkeit in einen gewünschten pH-Zustand versetzbar ist, wobei der Hohlraum des Hohlkörpers durch Öffnungsschlitze oder Öffnungsbohrungen zugänglich gemacht wird. Desweiteren können in den Hohlkörper lösbare Medikamentenzugaben eingegeben werden, die gleichzeitig mit der Flüssigkeit eingenommen werden sollen. Vorteilhafterweise ist es auch denkbar in den Hohlraum zusätzliche Gewichtselemente einzubringen, bei der die Durchmischung der Trinkflüssigkeit an die Viskosität der zu vermischenden Substanzen anpassbar ist und damit verkürzt werden kann.

Bei einer weiteren besonderen Ausführung der Erfindung ist zusätzlich vorgesehen, am unteren Teil des Mixbehälters ein oder mehrere anschraubbare Zusatzbehälter zu befestigen. Das hat den Vorteil, dass darin die zumischbaren Substanzen im mobilen Betrieb aufbewahrt und nach Bedarf in den Trinkbehälter auf einfachste Weise eingefüllt werden können.

Die Erfindung wird anhand eines Ausführungsbeispiels, das in der Zeichnung dargestellt ist, näher erläutert. Es zeigen:
- Fig. 1:: eine Explosionsdarstellung einer Mixflasche mit einem Trinkverschluss, einem Mischelement, einem Trinkbehälter, sowie drei Zusatzbehältern;
- Fig. 2:: ein Mischelement mit einem zentralen inneren schraubenförmigen Spiralteil;
- Fig. 3:: ein Mischelement mit einem koaxialen äußeren schraubenförmigen Spiralteil;
- Fig. 4:: ein Mischelement mit einem im zentralen inneren schraubenförmigen Spiralteil fixiertem zentralem Hohlkörper;
- Fig. 5:: ein Hohlkörper aus Plastikmaterial, und
- Fig. 6:: ein Mischelement mit zwei schneckenförmigen Spiralteilen und einem dazwischen angeordnetem zentralen Hohlkörper.

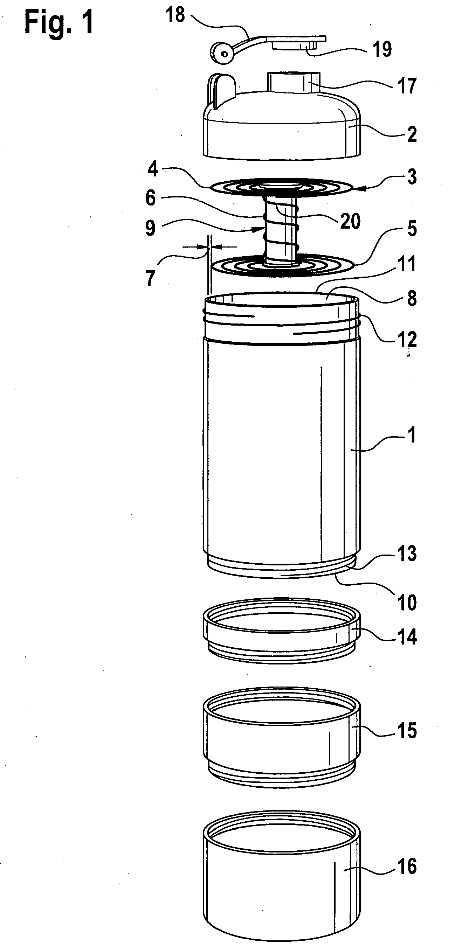

In Fig. 1 der Zeichnung ist ein Mixbehälter dargestellt, der als Mixflasche mit einem zylindrischen Behälterteil 1 ausgebildet ist, in dem ein an dessen Innendurchmesser angepasstes Mischelement 3 axial beweglich angeordnet ist, das zwei axial beabstandete schneckenförmige Spiralteile 4,5 aufweist und zwischen denen ein schraubenförmiges Spiralteil 6 mit geringerem Durchmesser zentral angeordnet ist, wobei im schraubenförmigen Spiralteil 6 ein Hohlkörper 9 aus Plastikmaterial fixiert ist, und das der Trinkbehälter von einem deckelförmigen Trinkverschluss 2 als Deckelelement verschließbar ist.

Der Trinkbehälter besteht aus einem zylinderförmigen Behälterteil 1, das einen gleichbleibenden Innendurchmesser aufweist und unten durch eine Grundfläche 10 verschlossen ist. An der oberen Behälteröffnung 11 ist ein erstes Außengewinde 12 angebracht, das mit einem Deckelelement 2 mit Innengewinde verschließbar ist. Der Trinkbehälter 1 ist vorzugsweise aus Kunststoffmaterial hergestellt, kann aber auch aus Metall oder Glas gefertigt werden. Desweiteren enthält der Trinkbehälter 1 an seiner unteren Grundfläche 10 ein zweites Außengewinde 13, an das vorzugsweise Zusatzbehälter 14,15,16 anschraubbar sind.

In der dargestellten Ausführungsform enthält der Trinkbehälter 1 vorzugsweise drei Zusatzbehälter 14, 15, 16, die mindestens ein Innengewinde aufweisen, mit dem sie mit dem Trinkbehälter 1 oder einem weiteren Zusatzbehälter 14, 15, 16 verbunden werden können. Diese Zusatzbehälter 14, 15, 16 sind ebenfalls vorzugsweise aus Kunststoffmaterial ausgebildet und dienen der Aufnahme von zumischbaren Nahrungsergänzungsmitteln, pH-Sticks oder Medikamentenzugaben. Desweiteren können in einem der Zusatzbehälter 14,15,16 auch das Mischelement 3 untergebracht werden, so dass dieses erst während des Mischvorgangs in den Behälterinnenraum 8 eingefügt werden muss und so im mobilen Betrieb nicht störend in der Mischflüssigkeit hin und her gleitet oder an den Wänden anschlägt.

Zum Verschließen des Behälterteils 1 ist als Deckelelement 2 ein verschraubbarer Trinkverschluss vorgesehen, der ein Innengewinde aufweist, das mit dem ersten Außengewinde 12 der Mix- oder Trinkflasche flüssigkeitsdicht verschraubbar ist. Damit die mit einem Nahrungsergänzungsmittel oder dergleichen vermischte Trinkflüssigkeit sogleich nach dem Mischvorgang getrunken werden kann, enthält der Trinkverschluss 2 zusätzlich einen Trinkstutzen 17, der mit dem Innenraum der Trinkflasche durch eine Öffnung verbunden ist. Zum Abdichten während des mobilen Betriebs und des Mischvorgangs ist am Trinkverschluss 2 zusätzlich noch ein verschwenkbarer Verschlussbügel 18 angeordnet, der einen ballenförmigen Verschlusskörper 19 enthält, der an die Öffnung des Trinkstutzens 17 querschnittsmäßig angepasst ist und diesen form- und kraftschlüssig durch eine Reibverbindung verschließt.

Zum Vermischen einer Trinkflüssigkeit vorzugsweise mit einem pulverförmigen Nahrungsergänzungsmittel ist innerhalb des Mix- oder Trinkbehälters das dargestellte Mischelement 3 einsetzbar. Dieses Mischelement 3 besteht aus einer gewickelten Drahtwendel 20, vorzugsweise aus einem runden Metalldraht von 1 bis 3mm Durchmesser.

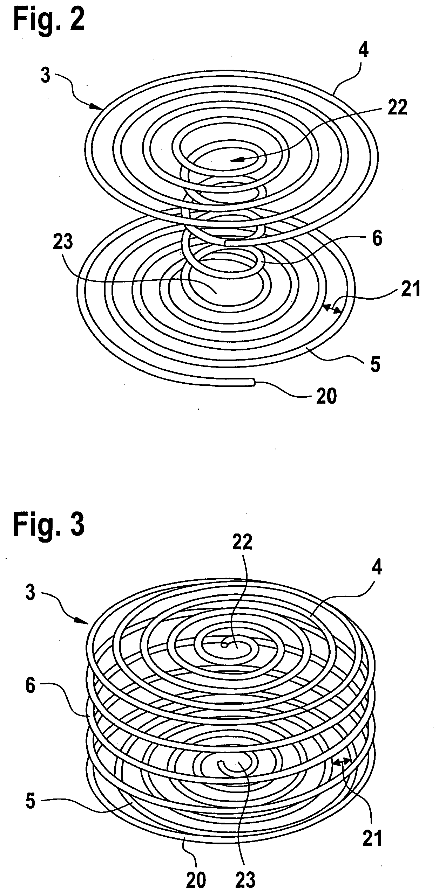

Das Mischelement aus einer durchgehenden Drahtwendel 20 ist im Einzelnen in Fig. 2 der Zeichnung näher dargestellt. Dieses Mischelement 3 besteht dabei aus zwei flachen beabstandeten schneckenförmigen Spiralteilen 4,5, deren Außendurchmesser auf den Innendurchmesser des Trinkgefäßes 1 als Behälterteil angepasst ist. Dabei ist der Außendurchmesser der beiden beabstandeten Schneckenspiralen 4,5 ca. 0,1 bis 1mm kleiner als der Innendurchmesser des Trinkgefäßes 1, so dass sich dadurch ein Gleitspalt 7 bildet. Zur Verbindung der beiden schneckenförmigen Spiralteile 4,5 ist im Zentrum des Mischelements 3 der schraubenförmige Spiralteil 6 angeordnet, dessen Durchmesser ca. 1/5 bis 1/3 des der Schneckenspiralen 4,5 Außendurchmessers aufweist.

Das aus der Drahtwendel 20 gewickelte Mischelement 3 besteht vorzugsweise aus korrosionsfestem Edelstahl oder vergleichbarem Material. Durch den gewickelten Stahldraht entsteht ein Mischelement 3, das starr ist oder eine geringe Elastizität aufweist, durch das die Außenform nur während des Schüttelvorgangs beim Vermischen leicht elastisch veränderbar ist. Ein derartiges Mischelement 3 kann auch aus drei oder mehr schneckenförmigen Spiralteilen 4,5 bestehen, die durch mehrere zentrale schraubenförmige Spiralteile 6 miteinander verbunden sind. Als Draht wird vorzugsweise ein Runddraht vorgesehen, wobei das einteilige Mischelement 3 auch aus einem Mehrkantdraht bestehen kann, durch den vorzugsweise die Innenflächen des Trinkgefäßes 1 durch dessen Kanten besser von anhaftenden Pulverrückständen zur gleichmäßigeren Vermischung entfernt werden kann. Da die schraubenförmigen Spiralteile 4,5 gleichzeitig eine Siebfunktion beim Mischen ausüben, sind deren radiale Drahtabstände vorzugsweise 1 bis 10mm , und belassen im Zentrum 22 einen zentralen Durchlass 23 von ca. 5 bis 30mm Durchmesser.

In Fig. 3 der Zeichnung ist eine weitere Ausführung des Mischelements 3 dargestellt, bei der die beiden beabstandeten schneckenförmigen Spiralteile4,5 mit einem äußeren koaxialen schraubenförmigen Spiralteil 6 axial verbunden sind. Dabei ist dieses Mischelement 3 ebenfalls als einteilige Drahtwendel 20 ausgebildet, bei der die beiden axial beabstandeten schneckenförmigen Spiralteile 4,5 im Zentrum 22 enden und von dort aus gewickelt sind, so dass dessen zentraler Durchlass 23 gegenüber dem Mischelement 3 nach Fig. 2 in der Regel kleiner ist. Hierdurch kann die Mischwirkung die vorzugsweise durch die schneckenförmigen Spiralteile 4,5 erzeugt wird, leicht verbessert werden. Da die schneckenförmigen Spiralteile 4,5 wie ein Sieb wirken, sind deren radiale Abstände 21 zueinander an die zu vermischenden Substanzen anpassbar. Bei den vorgesehen pulverförmigen Nahrungsergänzungsmitteln sind die radialen Abstände 21 zwischen den einzelnen Schneckengängen idealerweise nur 3 bis 5mm, um Anhaftungen zu vermeiden und eine gute Mischwirkung zu erzielen. Die axialen Abstände zwischen den schraubenförmigen Gängen sind vorzugsweise5 bis 15mm. Bei dem Mischelement nach Fig. 3 ist sowohl der Außendurchmesser der schneckenförmigen Spiralteile 4,5 als auch der Außendurchmesser des schraubenförmigen Spiralteils 6 gleich groß und an den Innendurchmesser bzgl. eines Gleitspaltes 7 angepasst. Bei üblichen Trinkflaschen ist dabei ein Außendurchmesser von ca. 50 bis 100mm vorgesehen, wobei bei Trinkflaschenhöhen von ca. 150 bis 200 mm die Mischelemente 3 vorzugsweise eine Höhe von ca. 50 bis ca. 100mm aufweisen.

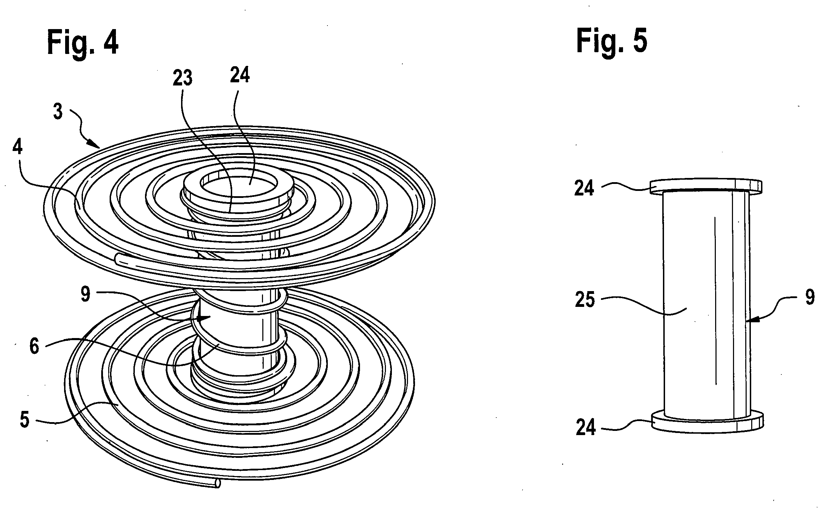

Bei einer besonderen Ausführung des Mischelements 3 nach Fig. 2 der Zeichnung ist zusätzlich im Zentrum 22 innerhalb des schraubenförmigen Spiralteil 6 ein Hohlkörper 9 aus Plastikmaterial fixiert, das in Fig. 4 der Zeichnung näher dargestellt ist. Dabei ist der Hohlkörper 9 zylinderförmig ausgeführt, dessen Außendurchmesser an den Innendurchmesser des schraubenförmigen Spiralteils 6 angepasst ist und auch an diesen durch eine Reibverbindung fixiert wird. Desweiteren enthält der Hohlkörper 9 zwei Abdeckelemente 24, deren Durchmesser gegenüber dem Außendurchmesser des Zylinderteils 25 vorzugsweise um den Drahtdurchmesser vergrößert ist. Dabei ist vorzugsweise eines der Abdeckelemente 24 als Schraubteil mit Außengewinde ausgeführt, das in das Innengewinde des Hohlköpers 9 dicht einschraubbar ist. Deshalb ist der Hohlkörper 9 auf einfache Art und Weise in den zentralen Durchlass 23 des schraubenförmigen Spiralteils 6 einschiebbar und durch Aufschrauben eines Abdeckelements 24 in diesem fest fixierbar.

Dieser Hohlkörper 9 ist vorzugsweise aus einem einfach herzustellenden Plastikmaterial gefertigt, kann aber auch aus Metall oder Keramik hergestellt werden. Der Innenraum des Hohlkörpers 9 ist vorzugsweise durch mindestens eines der Abdeckelemente 24 feuchtigkeitsdicht verschließbar, so dass darin Kühlmittel oder auch Zusatzgewichtsteile einbringbar sind.

Die Ausführung dieses Hohlkörpers 9 ist im Einzelnen in Fig. 5 der Zeichnung näher dargestellt. Bei dieser Ausführung ist das untere Abdeckelement 24 fest mit dem zylinderförmigen Hohlkörper 9 verbunden, während das obere Abdeckelement 24 einen Gewindeverschluss enthält und damit lösbar ist. Bei einer besonderen Ausführung dieses Hohlkörpers 9 können sowohl in dem Abdeckelement 24 als auch im Zylinderteil 25 Durchlassöffnungen eingebracht sein, durch die die Trinkflüssigkeit in den Innenraum eindringen kann. Bei einer derartigen Ausführung ist vorgesehen, im Innenraum des Hohlkörpers 9 pH-Sticks einzubringen, durch die der pH-Wert der Trinkflüssigkeit verändert werden kann. Bei einer derartigen Ausführung ist es auch denkbar, medikamentöse Zusätze in den Innenraum des Zylinderteils 25 einzubringen, die in der Trinkflüssigkeit lösbar sind und die mit dieser aufgenommen werden sollen.

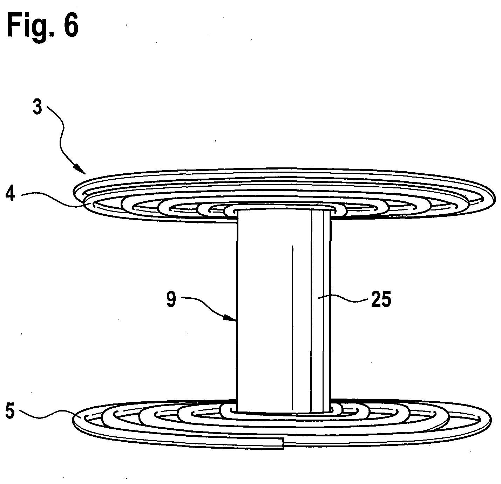

Eine vereinfachte alternative Ausführung eines Mischelements 3 ist in Fig. 6 der Zeichnung näher dargestellt. Das Mischelement 3 besteht dabei lediglich aus zwei axial beabstandeten schneckenförmigen Spiralteilen 4,5, die nur durch den zentralen Hohlkörper 9 axial miteinander verbunden sind. Dabei sind sowohl die schneckenförmigen Spiralteile 4,5 als auch der dazwischen angeordnete Hohlkörper 9 so ausgeführt, wie dies bereits zu den Mischelementen 3 der Fig. 2 bis 5 beschrieben wurde. Allerdings werden dabei die schneckenförmigen Spiralteile 4,5 nach dem Abschrauben eines Abdeckelements 24 auf den Zylinderteil 25 des Hohlkörpers 9 aufgeschoben und im Bereich des zentralen Durchlasses 23 durch eine Klemmkraft mit dem Zylinderteil 25 an diesem fixiert. Zum besseren Halt können auf der äußeren Oberfläche des Zylinderteils 25 auch Nuten aufgebracht werden, in die die inneren Drahtwendeln 20 der schneckenförmigen Spiralteile 4,5 eingeschnappt werden. Dabei ist es gleichfalls möglich, auf dem Zylinderteil 25 auch mehr als nur zwei schneckenförmige Spiralteile 4,5 zu befestigen, um die Siebwirkung und die Führung innerhalb des Behälterinnenraums 8 zu verbessern. Durch einen derartigen Hohlkörper 9 ist es auch möglich, auf einfach Art die Länge der Mischelemente 3 auf die jeweiligen zylindrischen Behälter 1 abzustimmen. Denn es ist in der Praxis vorteilhaft, für unterschiedliche Aufgaben auch verschieden große zylindrische Behälter 1 vorzuhalten, die vorzugsweise lediglich in ihrer Länge variieren können. So werden daraufhin verschiedene Zylinderteile 25 vorgesehen, die sich lediglich in ihrer Länge unterscheiden und so die Mischelemente 3 je nach Länge an die jeweiligen zylindrischen Behälter 1 angepasst sind.

Zum Vermischen einer Flüssigkeit vorzugsweise mit einer pulverförmigen Substanz, werden diese zunächst nacheinander in den Behälterinnenraum 8 eingefüllt. Davor oder danach wird dann das Mischelement 3 axial gleitend in den Behälterinnenraum 8 eingeführt, indem dieses durch sein Eigengewicht nach unten sinkt. Daraufhin wird der Behälter 1 durch ein Deckelelement 2 oder einen Trinkverschluss flüssigkeitsdicht verschlossen. Zum Vermischen wird dann der gesamte Mixbehälter vorzugsweise in axialer Richtung geschüttelt, so dass das Mischelement 3 durch sein Eigengewicht und die Schüttelbewegung innerhalb des Innenraums 8 des Behälters 1 axial vom Boden der Grundfläche 10 bis zum Deckelelement 2 und wieder zurück verfährt. Dadurch strömt bereits bei einem einzigen hin und her gehenden Schüttelvorgang die gesamte Flüssigkeitsmenge mit der zu mischenden Substanz durch die beiden oder mehr schneckenförmigen Spiralteile 4,5, die wie ein Sieb wirken. Dadurch lösen sich auf einfache Art die sich in der Flüssigkeit gebildete Verklumpungen auf und es werden auch die Anhaftungen an den Seitenwänden und im Boden- und Deckelbereich aufgelöst und gleichmäßig mit der Flüssigkeit vermischt. Deshalb sind durch wenige Schüttelbewegungen gute Vermischungsresultate erreichbar, und es werden gleichzeitig auch Anhaftungen an den inneren Seitenwänden als auch im Boden- und Deckelbereich durch ein Anschlagen des Mischelements 3 beseitigt.

Da derartige schnecken- und schraubenförmige Spiralteile durch einen einfachen Wickelvorgang kostengünstig herstellbar sind, können derartige Mischelemente 3 nicht nur zur Herstellung von Trinkflüssigkeiten, sondern auch zur Vermischung von Farbpigmenten oder anderen chemischen Substanzen in entsprechenden Mixbehältern auch nach einem Absetzvorgang jederzeit miteinander zu einer gleichmäßigen Dispersion wieder vermischt werden.

## Patentansprüche

1. Mixbehälter, der einen innen zylindrischen Behälter (1) mit einem oben verschließbaren Deckelelement (2) und ein innen axial beweglich angeordnetes Mischelement (3) enthält,
**dadurch gekennzeichnet, dass**
das Mischelement (3) mindestens zwei schneckenförmige Spiralteile (4, 5) mit mindestens einem axial dazwischen angeordneten schraubenförmigen Spiralteil (6) enthält, das aus mindestens einer einteiligen Drahtwendel (20) besteht und durch seine schneckenförmigen (4,5) und/oder schraubenförmigen Spiralteile (6) außen an den Innendurchmesser des Behälters (1) unter Beibehaltung eines geringen Gleitspaltes (7) angepasst ist,
wobei das Mischelement (3) eine axiale Länge von mindestens 1/4 bis höchsten 2/3 des Behälterinnenraums (8) aufweist.

2. Mixbehälter nach Anspruch 1, **dadurch gekennzeichnet, dass** das Mischelement (3) aus zwei axial beabstandeten schneckenförmigen Spiralteilen (4,5) besteht, die einen Außendurchmesser aufweisen, der etwa 0,1 mm bis 1 mm kleiner als der Innendurchmesser des Behälterinnenraums (8) ist und einen zentralen schraubenförmigen Spiralteil (6) enthält, dessen Außendurchmesser ca. 1/5 bis 1/3 des Außendurchmessers der schneckenförmigen Spiralteile (4,5) aufweist.

3. Mixbehälter nach Anspruch 1, **dadurch gekennzeichnet, dass** das Mischelement (3) aus zwei axial beabstandeten schneckenförmigen Spiralteilen (4,5) besteht, die einen Außendurchmesser aufweisen, der etwa 0,1 mm bis 1 mm kleiner als der Innendurchmesser des Behälterinnenraums (8) ist und einen koaxial äußeren schraubenförmigen Spiralteil enthält, dessen Außendurchmesser dem Außendurchmesser der schneckenförmigen Spiralteile (4,5) entspricht.

4. Mixbehälter nach einem der vorhergehenden Ansprüche, **dadurch gekennzeichnet, dass** das Mischelement (3) aus einer einteiligen gewickelten Drahtwendel (20) besteht, wobei der Drahtquerschnitt rund oder eckig ausgebildet ist.

5. Mixbehälter nach einem der vorhergehenden Ansprüche, **dadurch gekennzeichnet, dass** im Zentrum (22) der schraubenförmigen Spiralteile (6) und der schneckenförmigen Spiralteile (4,5) ein befüllbarer Hohlkörper (9) fixiert ist.

6. Mixbehälter, der einen innen zylindrischen Behälter (1) mit einem oben verschließbaren Deckelelement (2) und ein innen axial beweglich angeordnetes Mischelement (3) enthält,
**dadurch gekennzeichnet, dass**
das Mischelement (3) mindestens zwei schneckenförmige Spiralteile (4, 5) und einem axial dazwischen angeordneten Hohlkörper (9) enthält, wobei die schneckenförmigen Spiralteile 4,5 aus einer Drahtwendel (20) bestehen und deren schneckenförmige Spiralteile (4,5) außen an den Innendurchmesser des Behälters (1) unter Beibehaltung eines geringen Gleitspaltes (7) angepasst sind,
wobei das Mischelement (3) eine axiale Länge von mindestens 1/4 bis höchsten 2/3 des Behälterinnenraums (8) aufweist.

7. Mixbehälter nach Anspruch 6, **dadurch gekennzeichnet, dass** der Hohlkörper (9) aus einem verschließbaren Zylinderteil (25) besteht, der axial zwischen den beiden schneckenförmigen Spiralteilen (4,5) angeordnet ist.

8. Mixbehälter nach Anspruch 7, **dadurch gekennzeichnet, dass** der hohle Zylinderteil (25) mehrere Durchlassöffnungen zum Ein- und Ausfluss der Mischflüssigkeit enthält.

9. Mixbehälter nach einem der Ansprüche 6 bis 8, **dadurch gekennzeichnet, dass** der Hohlkörper (9) aus einem Kunststoff- oder Metallmaterial besteht.

10. Mixbehälter nach einem der Ansprüche 6 bis 9, **dadurch gekennzeichnet, dass** der Außendurchmesser des Hohlkörpers (9) dem Innendurchmesser des zentralen schraubenförmigen Spiralteils (6) entspricht und zwei Abdeckelemente (24) enthält, deren Außendurchmesser größer als der Innendurchmesser des schraubenförmigen Spiralteils (6) ist, wobei mindestens einer der beiden Abdeckelemente (24) mit dem hohlen Zylinderteil (25) verschraubbar ist.

11. Mixbehälter nach einem der vorhergehenden Ansprüche, **dadurch gekennzeichnet, dass** dieser als Trinkflasche ausgebildet ist, wobei der zylindrische Behälter (1) ein erstes Außengewinde (12) aufweist, der mit dem Innengewinde eines Trinkverschlusses (2) als Deckelelement dicht verschraubbar ist, wobei der Trinkverschluss (2) einen Trinkstutzen (17) enthält, der mit dem Behälterinnenraum (8) durch eine runde Öffnung verbunden ist und das Deckelelement (2) einen verschwenkbaren Verschlussbügel (18) enthält, mit dem der Trinkstutzen (17) verschließ- und öffenbar ist.

## Claims

1. Mixing container which comprises an internal cylindrical container (1) with a lid element (2) that can be closed at the top, and an internal mixing element (3) that is arranged in an axially movable way,
**characterized in that**
the mixing element (3) comprises at least two worm-like spiral parts (4, 5) with at least one screw-like spiral part (6) that is arranged axially there-between, and comprises at least one single-part wire helix (20) which is externally adapted to the internal diameter of the container (1) due to its worm-like (4, 5) and/or screw-like spiral parts (6), maintaining a small sliding gap (7),
the mixing element (3) having an axial length of min. 1/4 to max. 2/3 of the container interior (8).

2. Mixing container as per claim 1, **characterized in that** the mixing element (3) comprises two worm-like spiral parts (4, 5) with axial distance and an external diameter which is approx. 0.1 mm to 1 mm smaller than the internal diameter of the container interior (8), and comprises a central screw-like spiral part (6), the external diameter of which is approx. 1/5 to 1/3 of the external diameter of the worm-like spiral parts (4, 5).

3. Mixing container as per claim 1, **characterized in that** the mixing element (3) comprises two worm-like spiral parts (4, 5) with axial distance and an external diameter which is approx. 0.1 mm to 1 mm smaller than the internal diameter of the container interior (8) and comprises a coaxial screw-like spiral part the external diameter of which corresponds to the external diameter of the worm-like spiral parts (4, 5).

4. Mixing container as per one of the previous claims, **characterized in that** the mixing element (3) comprises a single-part wound wire helix (20), the wire section being round or angular-shaped.

5. Mixing container as per one of the previous claims, **characterized in that** a fillable hollow body (9) is fixed in the center (22) of the screw-like spiral parts (6) and the worm-like spiral parts (4, 5).

6. Mixing container which comprises an internal cylindrical container (1) with a lid element (2) that can be closed at the top, and with an internal mixing element (3) that is arranged in an axially movable way,
**characterized in that**
the mixing element (3) comprises at least two worm-like spiral parts (4, 5) and an axially designed hollow body (9) therebetween, the worm-like spiral parts (4, 5) comprising a wire helix (20), and the worm-like spiral parts (4, 5) are externally adapted to the internal diameter of the container (1) main-taining a small sliding gap (7), the mixing element (3) having an axial length of min. 1/4 to max. 2/3 of the container interior (8).

7. Mixing container as per claim 6, **characterized in that** the hollow body (9) comprises a closable cylindrical body (25) which is designed axially between the two worm-like spiral parts (4, 5).

8. Mixing container as per claim 7, **characterized in that** the hollow cylindrical part (25) has several openings for the inlet and outlet of the liquid mixture.

9. Mixing container as per claims 6 to 8, **characterized in that** the hollow body (9) is made of plastic or metal material.

10. Mixing container as per claims 6 to 9, **characterized in that** the external diameter of the hollow body (9) corresponds to the internal diameter of the central screw-like spiral part (6) and comprises two covering elements (24), the external diameters of which is bigger than the internal diameter of the screw-like spiral part (6), at least one of the two covering elements (24) being screwable with the hollow cylindrical body (25).

11. Mixing container as per one of the previous claims, **characterized in that** the container is designed as drink bottle, the cylindrical container (1) having a first external thread and the container is tightly screwable with the internal thread of a drinking lid (2) as cover element, the drinking lid (2) having a drinking spout (17) which is connected with the container interior (8) by a round aperture, and the cover element (2) comprising a swivel-type bracket (18) which is used to open and close the drinking spout.

## Revendications

1. Récipient mélangeur qui contient un récipient (1) cylindrique à l'intérieur, doté d'un élément de couvercle (2) refermable en haut, et un élément de mélange (3) monté axialement mobile à l'intérieur,
**caractérisé en ce que**
l'élément de mélange (3) contient au moins deux pièces à spirales en forme de spires (4, 5) avec au moins une pièce à spirales de forme hélicoïdale (6) montée axialement entre elles, laquelle est constituée d'au moins un fil mono-pièce enroulé en spirale (20) et est, grâce à ses pièces à spirales en forme de spires (4, 5) et/ou à ses pièces à spirales de forme hélicoïdale (6), adaptée à l'extérieur au diamètre intérieur du récipient (1) tout en maintenant un léger espace de glissement (7), ledit élément de mélange (3) présentant une longueur axiale d'au moins 1/4 à 2/3 au maximum de l'espace intérieur du récipient (8).

2. Récipient mélangeur selon la revendication 1, **caractérisé en ce que** l'élément de mélange (3) est constitué de deux pièces à spirales en forme de spires (4, 5) espacées axialement qui présentent un diamètre extérieur qui est inférieur d'environ 0,1 mm à 1 mm au diamètre intérieur de l'espace intérieur du récipient (8) et qui contient une pièce à spirales centrale de forme hélicoïdale (6) dont le diamètre extérieur est d'environ 1/5 à 1/3 du diamètre extérieur des pièces à spirales en forme de spires (4, 5).

3. Récipient mélangeur selon la revendication 1, **caractérisé en ce que** l'élément de mélange (3) est constitué de deux pièces à spirales en forme de spires (4, 5) espacées axialement qui présentent un diamètre extérieur inférieur d'environ 0,1 mm à 1 mm au diamètre intérieur de l'espace intérieur du récipient (8) et qui contient une pièce à spirales extérieure coaxiale de forme hélicoïdale dont le diamètre extérieur correspond au diamètre extérieur des pièces à spirales en forme de spires (4, 5).

4. Récipient mélangeur selon l'une quelconque des revendications précédentes, **caractérisé en ce que** l'élément de mélange (3) est constitué d'un fil mono-pièce enroulé en spirale (20), la section du fil étant conçue ronde ou carrée.

5. Récipient mélangeur selon l'une quelconque des revendica¬tions précédentes, **caractérisé en ce qu'**un corps creux remplissable (9) est fixé au centre (22) des pièces à spirales de forme hélicoïdale (6) et des pièces à spirales en forme de spires (4, 5)).

6. Récipient mélangeur qui contient un récipient (1) cylin-drique à l'intérieur, doté d'un élément de couvercle (2) refermable en haut, et un élément de mélange (3) monté axialement mobile à l'intérieur,
**caractérisé en ce que**
l'élément de mélange (3) contient au moins deux pièces à spirales en forme de spires (4, 5) et un corps creux (9) monté axialement entre elles, les pièces à spirales en forme de spires (4, 5) étant constituées d'un fil enroulé en spirale (20) et leurs pièces à spirales en forme de spires (4, 5) étant adaptées à l'extérieur au diamètre intérieur du récipient (1) tout en maintenant un léger espace de glissement (7),
ledit élément de mélange (3) présentant une longueur axiale d'au moins 1/4 à 2/3 au maximum de l'espace intérieur du récipient (8).

7. Récipient mélangeur selon la revendication 6, **caractérisé en ce que** le corps creux (9) est constitué d'une pièce cylindrique (25) refermable qui est montée axialement entre les deux pièces à spirales en forme de spires (4, 5).

8. Récipient mélangeur selon la revendication 7, **caractérisé en ce que** la pièce cylindrique creuse (25) contient plusieurs ouvertures de passage pour l'entrée et la sortie du liquide de mélange.

9. Récipient mélangeur selon l'une quelconque des revendica¬tions 6 à 8, **caractérisé en ce que** le corps creux (9) est constitué d'un matériau plastique ou métallique.

10. Récipient mélangeur selon l'une quelconque des revendica¬tions 6 à 9, **caractérisé en ce que** le diamètre extérieur du corps creux (9) correspond au diamètre intérieur de la pièce à spirales centrale de forme hélicoïdale (6) et qu'il contient deux éléments de couverture (24) dont le diamètre extérieur est supérieur au diamètre inférieur de la pièce à spirales de forme hélicoïdale (6), au moins un des deux éléments de couverture (24) étant vissable à la pièce cylindrique creuse (25).

11. Récipient mélangeur selon l'une quelconque des revendica¬tions précédentes, **caractérisé en ce qu'**il est conçu en tant que gourde, le récipient cylindrique (1) présentant un premier filetage extérieur (12) qui peut être vissé hermétiquement au filetage intérieur d'un bouchon pour boire (2) en tant qu'élément de couvercle, le bouchon pour boire (2) contenant un goulot (17) qui est relié à l'espace intérieur du récipient (8) par une ouverture ronde, et l'élément de couverture (2) contenant une agrafe de fermeture basculable (18) avec laquelle le goulot (17) peut être fermé et ouvert.
